# EUROPEAN PATENT SPECIFICATION

(11) **EP 2 325 262 B1**
(45) Date of publication and mention of the grant of the patent: **29.08.2012**
(21) Application number: 10251896.6
(22) Date of filing: 03.11.2010
(51) Int. Cl.: C08L 83/06, B01D 19/04, C08K 9/06

(54) **Preparation of antifoaming oil compound and antifoam composition**
Herstellung einer Schaum verhütenden Ölverbindung und Schaumverhütungszusammensetzung
Préparation d'un composé d'huile antimousse et composition antimousse

(30) Priority: 18.11.2009 JP 2009262652
(43) Date of publication of application: 25.05.2011
(73) Proprietor: Shin-Etsu Chemical Co., Ltd., Tokyo (JP)
(72) Inventor: Takewaki, Kazuyuki, Annaka-shi Gunma-ken (JP); Takada, Yuko, Annaka-shi Gunma-ken (JP)
(74) Representative: Stoner, Gerard Patrick

(56) References cited:
- JP-A- 2005 324 140
- JP-A- 2007 222 812

## Description

### TECHNICAL FIELD

This invention relates to the neutralization of an antifoaming oil compound prepared by mixing components in the presence of an alkaline catalyst, and more particularly, to a method for preparing an oil compound suited for use to form a silicone-based antifoam composition having effective foam-breaking, persistent antifoaming ability and internal addition stability in foaming liquids, especially alkaline foaming liquids, the oil compound experiencing a least change with time of viscosity and being easy to remove the residual neutralizing agent therefrom. It also relates to an antifoam composition comprising the oil compound.

### BACKGROUND

Silicone-based antifoam agents have many superior properties to other antifoam agents and are widely used in foam-generating steps involved in chemical, food, oil, fabric, paper, pulp, pharmaceutical and other industries. Commonly used are oil compound type antifoam agents comprising silicone oils such as dimethylpolysiloxane, methylphenylpolysiloxane and methylvinylpolysiloxane in admixture with finely divided silica, emulsion type antifoam agents obtained by dispersing these oil compounds in water together with surfactants, and self-emulsification type antifoam agents comprising a polyoxyalkylene-modified organopolysiloxane and an oil compound. These antifoam agents are described in JP-B S51-71886, JP-B S54-43015, JP-B S52-19836, JP-B S52-22638, and JP-B S55-23084.

These conventional antifoam agents, however, suffer from the problem that their antifoaming ability declines or separation and sedimentation occur during long-term contact with foaming liquids. The problem becomes outstanding particularly when the foaming liquids are alkaline.

When the foam-generating step continues long, the antifoaming ability lowers from the initial with the lapse of time. Then an additional amount of the antifoam agent must be supplemented, leading to a lowering of yield and troubles due to addition of a large amount of the antifoam agent.

A variety of proposals were made to overcome these problems and to further improve antifoaming ability. For example, with respect to the silica used in oil compounds, JP-B S52-31836 teaches the pretreatment of silica with chlorosilanes to be hydrophobic. JP-B S51-35556 discloses the treatment of silica with nitrogen-containing organosilicon compounds. It would be desirable to further improve the antifoaming ability.

Recent addresses to the problem include an antifoam composition of self-emulsification type which is improved in alkali resistance by mixing and treating hydrophobic organopolysiloxane and finely divided silica surface treated with organopolysiloxane, in the presence of an alkaline catalyst (JP 4232031), and an antifoam composition of emulsion type (JP-A 2007-222812). These compositions still suffer from the problems that the oil compound changes its viscosity with time, we believe due to short neutralization in the neutralization step of the oil compound preparation process, and that the organic or inorganic acid used as the neutralizing agent is difficult to remove.

### Citation List

Patent Document 1: JP-B S51-71886
Patent Document 2: JP-B S54-43015
Patent Document 3: JP-B S52-19836
Patent Document 4: JP-B S52-22638
Patent Document 5: JP-B S55-23084
Patent Document 6: JP-B S52-31836
Patent Document 7: JP-B S51-35556
Patent Document 8: JP 4232031
Patent Document 9: JP-A 2007-222812

An aim herein is to provide new and useful methods of preparing oil compounds useful as or in antifoam agents, exhibiting effective foam-breaking, persistent antifoaming ability and internal addition stability in foaming liquids, especially alkaline foaming liquids. Desirable aspects include less change of viscosity with time and the ability to remove residual neutralizing agent. The oil compound products, antifoam compositions comprising them, and use of such oil compounds and compositions as antifoam are further aspects of our proposals.

The inventors have found an oil compound which is prepared by mixing and treating a mixture of hydrophobic organopolysiloxane having certain physical properties and finely divided silica in the presence of an alkaline catalyst, and effecting neutralizing reaction with a solid acid such as succinic acid. This oil compound exhibits effective foam-breaking, persistent antifoaming ability and internal addition stability even in alkaline foaming liquids, experiences least changes with time of viscosity, and facilitates removal of the residual neutralizing agent therefrom. The oil compound is thus suited for use as an antifoam agent.

Accordingly, the invention provides a method for preparing an oil compound for use as an antifoam agent, comprising the steps of mixing and treating components (A), (B) and (C) at room temperature to 200°C, and neutralizing the mixture with a solid acid and removing the residual solid acid and neutralised salt by filtration. The components are (A) 100 parts by weight of an essentially hydrophobic organopolysiloxane having a viscosity of 10 to 100,000 mm²/s at 25°C, (B) 1 to 20 parts by weight of finely divided silica, and (C) 0.001 to 5 parts by weight of an alkaline catalyst comprising an oxide, hydroxide, alkoxide or siliconate of an alkali or alkaline earth metal.

Typically the solid acid is succinic acid, and the alkaline catalyst is potassium siliconate or potassium hydroxide.

Also provided is an antifoam composition comprising the oil compound prepared by the method defined herein.

In preferred embodiments, the antifoam composition is a solution type composition wherein the oil compound is dispersed in a solvent; a self-emulsification type composition further comprising a polyoxyalkylene-modified organopolysiloxane; or an emulsion type composition wherein the oil compound is emulsified.

### ADVANTAGEOUS EFFECTS

The oil compound is suited for use as an antifoam agent to formulate a silicone-based antifoam composition having effective foam-breaking, persistent antifoaming ability and internal addition stability even in alkaline foaming liquids.

### FURTHER EXPLANATIONS; OPTIONS AND PREFERENCES

Components (A) to (C) used herein are first described in detail.

Component (A) is an organopolysiloxane which is essentially hydrophobic. As used herein, "essentially hydrophobic" means hydrophobic overall, i.e. that the organopolysiloxane as a whole displays hydrophobic nature even if some functional groups therein are hydrophilic.

The essentially hydrophobic organopolysiloxane (A), which may be either linear or branched, preferably has the average compositional formula (I).

RₘSiO_{(4-m)/2} (I)

Herein R which may be the same or different denotes a substituted or unsubstituted, monovalent hydrocarbon group of 1 to 18 carbon atoms. Examples of the monovalent hydrocarbon groups represented by R include alkyl groups such as methyl, ethyl, propyl, butyl, pentyl, hexyl, heptyl, octyl, nonyl, decyl, dodecyl, tridecyl, tetradecyl, hexadecyl and octadecyl; cycloalkyl groups such as cyclohexyl; alkenyl groups such as vinyl and allyl; aryl groups such as phenyl and tolyl; aralkyl groups such as styryl and α-methylstyryl; and substituted forms of the foregoing in which some or all carbon-bonded hydrogen atoms are substituted by halogen atoms, cyano, amino or hydroxyl groups, such as, for example, chloromethyl, 3-chloropropyl, 3,3,3-trifluoropropyl, cyanoethyl, 3-aminopropyl, and N-(β-aminoethyl)-γ-aminopropyl. It is preferred for antifoaming ability and economy that at least 80 mol%, especially at least 90 mol% of all R be methyl. The subscript m is a positive number from 1.9 to 2.2, and preferably from 1.95 to 2.15. The organopolysiloxane may be terminated with a triorganosilyl group of the formula: R₃Si-or a diorganohydroxysilyl group of the formula: HOR₂Si-.

From the standpoints of antifoaming ability and working, the essentially hydrophobic organopolysiloxane (A) should have a viscosity at 25°C of 10 to 100,000 mm²/s, and preferably 50 to 30,000 mm²/s, as measured by an Ostwald viscometer. A viscosity of less than 10 mm²/s leads to a poor antifoaming ability whereas a viscosity of more than 100,000 mm²/s leads to a silicone oil compound having too high a viscosity to work.

Component (B) is finely divided silica which may be any of well-known silica species, for example, fumed silica, precipitated silica, and fired silica. Silica may be used alone or in admixture of two or more species. The finely divided silica should preferably have a specific surface area of at least 50 m²/g, more preferably 100 to 700 m²/g, and even more preferably 150 to 500 m²/g, as measured by the BET method. With a surface area of less than 50 m²/g, an appropriate antifoaming ability may not be attainable.

The finely divided silica may have been untreated or surface treated to be hydrophobic. The hydrophobic surface treatment of silica may be carried out by any well-known methods, for example, by treating hydrophilic silica with organosilicon compounds such as organochlorosilanes, organoalkoxysilanes, organodisilazanes, organopolysiloxanes, and organohydrogenpolysiloxanes.

An amount of finely divided silica added is 1 to 20 parts by weight, preferably 5 to 15 parts by weight per 100 parts by weight of organopolysiloxane (A). Less than 1 part by weight of silica may lead to poor antifoaming ability whereas more than 20 parts by weight of silica provides a silicone oil compound with an increased viscosity to interfere with working.

Component (C) is an alkaline catalyst which facilitates hydrophobic treatment by reactive adsorption of component (A) to surfaces of component (B) and improves wetting and dispersing properties of component (B) relative to component (A). The alkaline catalyst may be any of well-known alkaline catalysts commonly used in the transition reaction of polysiloxane. It is an oxide, hydroxide, alkoxide or siliconate of an alkali metal or alkaline earth metal. Inter alia, potassium siliconate and potassium hydroxide are preferred.

The alkaline catalyst (C) is used in an amount of 0.001 to 5 parts, preferably 0.01 to 3 parts, and more preferably 0.05 to 2 parts by weight per 100 parts by weight of the organopolysiloxane (A). Less than 0.001 part by weight of the catalyst is less effective whereas more than 5 parts by weight achieves little or no further improvement in catalysis and is costly.

The oil compound may be prepared by mixing and treating predetermined amounts of essentially hydrophobic organopolysiloxane (A), finely divided silica (B), and alkaline catalyst (C) at a temperature from room temperature to 200°C, preferably from 100 to 200°C, more preferably from 150 to 180°C, neutralizing the mixture with a solid acid, and removing the residual solid acid and the neutralized salt by filtration and optionally removing a low-boiling fraction by vacuum distillation.

It is noted that the mixing treatment time is usually 10 minutes to 5 hours, preferably 1 to 3 hours. Also preferably the mixing treatment is carried out in an inert atmosphere such as nitrogen.

After the completion of mixing treatment of components (A), (B) and (C), neutralization with a solid acid is effected for the purpose of neutralize the alkaline catalyst (C) for inactivation.

The solid acid used herein is selected from carboxylic acids which are solid at room temperature, for example, monocarboxylic acids such as benzoic acid, dicarboxylic acids such as oxalic acid, malonic acid, succinic acid, glutaric acid, adipic acid, phthalic acid, isophthalic acid, and terephthalic acid, and tricarboxylic acids such as citric acid, isocitric acid, oxalosuccinic acid, and aconitic acid. Inter alia, succinic acid is preferred because of a low acid dissociation constant and easy availability.

An amount of the solid acid used is determined relative to an active component of the alkaline catalyst which is alkali metal, such that a molar ratio of solid acid to alkali metal may range from 0.5 to 5.0, preferably from 0.55 to 3.0, more preferably from 0.6 to 1.2. A molar ratio of less than 0.5 may result in short neutralization. At a molar ratio of more than 5.0, a more fraction of succinic acid may be left, giving rise to such problems as an increased load of the removal step by filtration and an economic disadvantage.

Removal of the residual solid acid and the neutralized salt is achieved by filtering the oil compound. Filtration may be performed by any well-known methods using nylon mesh, metal mesh, filter paper, filter compact or the like.

In the method of the invention, kneading may be performed in any kneading apparatus which include gate mixers, kneaders, pressure kneaders, double-shaft type kneaders, and intensive mixers, but are not limited thereto. These kneading apparatus may be used in any of the mixing, neutralizing and subsequent steps. As used herein, the term "kneading" is interchangeable with compounding, mixing, milling, or agitation.

The silicone oil compound thus obtained is ready for use as such or may be used as an antifoam agent to formulate an antifoam composition. Exemplary antifoam compositions comprising the silicone oil compound include solution type antifoam compositions having the silicone oil compound dispersed in a solvent, self-emulsification type antifoam compositions comprising the silicone oil compound in admixture with a polyoxyalkylene-modified organopolysiloxane, and emulsion type antifoam compositions obtained by well-known emulsifying techniques.

Where the solution type antifoam composition is formulated by dispersing the silicone oil compound in a solvent, examples of the solvent used herein include those solvents in which essentially hydrophobic organopolysiloxane (A) is soluble, for example, toluene, xylene, hexane, chloroform, 2-butanone, and 4-methyl-2-pentanone.

In the solution type antifoam composition, the content of the silicone oil compound is preferably 5 to 80% and more preferably 30 to 70% by weight of the entire antifoam composition. Outside the range, an antifoam composition with a lower content of the oil compound may have a poor antifoaming ability whereas a higher content may compromise the solution type antifoam composition's main object of facilitating the dispersion of the oil compound.

Where the self-emulsification type antifoam composition is formulated by combining the silicone oil compound with a polyoxyalkylene-modified organopolysiloxane, the polyoxyalkylene-modified organopolysiloxane used typically has the general formula (II).

R¹₂R³SiO- (R¹₂SiO)ₓ-(R¹R²SiO)_{y}-SiR¹₂R³ (II)

In formula (II), R¹ which may be the same or different denotes a substituted or unsubstituted, monovalent hydrocarbon group of 1 to 18 carbon atoms, examples of which include alkyl groups such as methyl, ethyl, propyl, butyl, pentyl, hexyl, heptyl, octyl, nonyl, decyl, dodecyl, tridecyl, tetradecyl, hexadecyl and octadecyl; cycloalkyl groups such as cyclohexyl; alkenyl groups such as vinyl and allyl; aryl groups such as phenyl and tolyl; aralkyl groups such as styryl and α-methylstyryl; and substituted forms of the foregoing in which some or all carbon-bonded hydrogen atoms are substituted by halogen atoms, cyano, or amino groups, such as, for example, chloromethyl, 3-chloropropyl, 3,3,3-trifluoropropyl, cyanoethyl, 3-aminopropyl, and N-(β-aminoethyl)-γ-aminopropyl.

R² denotes a polyoxyalkylene group of the general formula (III).

-R⁴-O(CH₂CH₂O)ₐ-(CH₂(CH₃)CHO)_{b}-R⁵ (III)

Herein R⁴ is a divalent C₂-C₆ hydrocarbon group, examples of which include alkylene and alkenylene groups such as ethylene, propylene, butylene, pentene, and hexene. R⁵ is hydrogen, C₁-C₆ alkyl, acetyl or isocyano. Exemplary alkyl groups include methyl, ethyl, propyl, butyl and pentyl. The subscripts a and b are positive numbers satisfying 3 ≤ a+b ≤ 80, preferably 5 ≤ a+b s 60, and a/b = 2/8 to 8/2, and preferably a/b = 2.5/7.5 to 7.5/2.5.

R³ denotes a group like R¹ or R²,hydroxyl, or C₁-C₆ alkoxy. Exemplary groups of R³ are those exemplified for R¹ and R², and exemplary alkoxy groups include methoxy, ethoxy, propoxy and butoxy.

In formula (II), x is an integer of 5 to 200, preferably 20 to 150, and y is an integer of 1 to 30, preferably 1 to 20.

The polyoxyalkylene-modified organopolysiloxane may be used alone or in admixture of two or more. It preferably has a viscosity at 25°C of 10 to 10,000 mm²/s, more preferably 50 to 8,000 mm²/s, and even more preferably 500 to 5,000 mm²/s, as measured by an Ostwald viscometer.

Illustrative examples of the polyoxyalkylene-modified organopolysiloxane are given below.

(CH₃)]SiO-[(CH₃)₂SiO]₃₀-[(CH₃)R'SiO]₅-Si(CH₃)₃

R' : -C₃H₆O-(C₂H₄O)₃₀-(C₃H₆O)₁₀ -C₄H₉,

(CH₃)₃SiO-[(CH₃)₂SiO]₃₀- [(CH₃)R'SiO]₃-Si (CH₃)₃

R' : -C₃H₆O-(C₂H₄O)₂₀-(C₃H₆O)₂₀-C₄H₉,

(CH₃)₃SiO-[(CH₃)₂SiO]₄₀-[(CH₃)R'SiO]₄-Si(CH₃)₃

R' : -C₃H₆O-(C₂H₄O)₂₁-(C₃H₆O)₇-COCH₃,

(CH₃)₃SiO-[(CH₃)₂SiO]₅₀- [(CH₃)R"SiO]₆ - [(CH₃)R" 'SiO]₁-Si (CH₃)₃

R": -C₃H₆O-(C₂H₄O)₃₂- (C₃H₆O)₈-C₄H₉,
R"' : -C₁₂H₂₅

Where the self-emulsification type antifoam composition is formulated by combining the silicone oil compound with the polyoxyalkylene-modified organopolysiloxane, polyoxyalkylene polymers and nonionic surfactants may also be used. Exemplary polyoxyalkylene polymers include, but are not limited to,

HO-[CH₂(CH₃)CHO]₃₅-H, HO-[CH₂(CH₃)CHO]₇₀-H,

HO-(CH₂CHO)₄-[CH₂(CH₃)CHO]₃₀-H,

CH₂=CHCH₂O-(CH₂CH₂O)₃₂-[CH₂(CH₃)CHO]₈-H,

CH₂=CHCH₂O-(CH₂CH₂O)₂₂-[CH₂(CH₃)CHO]₂₂-C₄H₉,

and

CH₂=CHCH₂O-(CH₂CH₂O)₁₀-CH₃.

Exemplary nonionic surfactants include sorbitan fatty acid esters, glycerol fatty acid esters, polyglycerol fatty acid esters, propylene glycol fatty acid esters, sucrose fatty acid esters, polyoxyethylene alkyl ethers, polyoxyethyleneoxypropylene alkyl ethers, polyoxyethylene fatty acid esters, polyoxyethylene sorbitol fatty acid esters, polyoxyethylene glycerol fatty acid esters, polyoxyethylene propylene glycol fatty acid esters, polyoxyethylene castor oil, and polyoxyethylene hardened castor oil.

In the self-emulsification type antifoam composition, the content of the silicone oil compound is preferably 5 to 80%, more preferably 10 to 70%, and even more preferably 20 to 60% by weight of the entire antifoam composition. Outside the range, an antifoam composition with a lower content of the oil compound may have a poor antifoaming ability whereas a higher content may compromise the self-emulsification type antifoam composition's main object of facilitating the dispersion of the oil compound.

Where the emulsion type antifoam composition is formulated, any well-known emulsifying techniques may be used. Suitable emulsifiers for helping emulsify the silicone oil compound include the polyoxyalkylene-modified organopolysiloxanes, polyoxyalkylenes, and nonionic surfactants described above.

In the emulsion type antifoam composition, the polyoxyalkylene-modified organopolysiloxanes may be used alone or in admixture and preferably in an amount of 0 to 30%, and more preferably 1 to 20% by weight of the entire antifoam composition. A composition containing more than 30 wt% of the polyoxyalkylene-modified organopolysiloxane may have a poor antifoaming ability.

In the emulsion type antifoam composition, the polyoxyalkylene serves as a co-emulsifier. It may be used alone or in admixture and is preferably used in an amount of 0 to 40%, and more preferably 0 to 20% by weight of the entire antifoam composition. A composition containing more than 40 wt% of the polyoxyalkylene may have a poor antifoaming ability. When added, the polyoxyalkylene is used in an effective amount, preferably at least 5 wt% of the composition.

Further in the emulsion type antifoam composition, the nonionic surfactant helps disperse the silicone oil compound in water. It may be used alone or in admixture and is preferably used in an amount of 0 to 20%, and more preferably 1 to 10% by weight of the entire antifoam composition. A composition containing more than 20 wt% of the surfactant may have a high viscosity and become inefficient to work.

The emulsion type antifoam composition has a content of the silicone oil compound which is preferably 5 to 50%, and more preferably 10 to 40% by weight of the entire antifoam composition. Outside the range, an antifoam composition with a lower content of the oil compound may have a poor antifoaming ability whereas a composition with a higher content of the oil compound may have a high viscosity and become inefficient to work.

In the emulsion type antifoam composition, water must be added in an amount necessary to emulsify the silicone oil compound, polyoxyalkylene-modified organopolysiloxane, polyoxyalkylene, nonionic surfactant and the like. The amount of water in the composition is the balance to the sum of the contents of the respective components and is preferably 50 to 2,000 parts and more preferably 80 to 400 parts by weight per 100 parts by weight of the components combined.

The emulsion type antifoam composition may be prepared by mixing the predetermined amounts of the components (exclusive of water), and agitating and emulsifying them in water on a mixing/dispersing apparatus such as a homo-mixer, homogenizer or colloid mill while heating, if necessary. Preferably, the composition is prepared by uniformly mixing and dispersing the predetermined amounts of the components (exclusive of water), adding a portion of water, agitating the mixture for emulsification, adding the remaining portion of water, and uniformly agitating and mixing.

To the emulsion type antifoam composition, small amounts of preservatives and bactericides may be added for preservation purposes. Suitable preservatives and bactericides include sodium hypochlorite, sorbic acid, potassium sorbate, salicylic acid, sodium salicylate, benzoic acid, sodium benzoate, p-hydroxybenzoates, and isothiazolines. They are preferably added in an amount of 0 to 0.5% and more preferably 0.005 to 0.5% by weight of the entire antifoam composition.

To the emulsion type antifoam composition, small amounts of thickeners may be added for the purpose of increasing viscosity. Suitable thickeners include polyacrylic acid, sodium polyacrylate, acrylic acid/methacrylic acid copolymers, sodium carboxymethyl cellulose, methyl cellulose, hydroxypropyl methyl cellulose, hydroxyethyl methyl cellulose, xanthane gum, and guar gum. The thickener is preferably added in an amount of 0 to 1.0% and more preferably 0.01 to 0.5% by weight of the entire antifoam composition.

### EXAMPLES

Examples of the invention are given below by way of illustration and not by way of limitation. In Examples, all parts and % are by weight. The viscosity is a kinematic viscosity as measured at 25°C by an Ostwald viscometer.

### Example 1

Using a gate mixer, 100 parts of a both end trimethylsilyl-capped dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, and 1 part of potassium siliconate containing 3% potassium hydroxide as the alkaline catalyst were kneaded in a nitrogen gas atmosphere at 150°C for 3 hours. The mixture was then cooled below 100°C, neutralized with 0.1 part of succinic acid, and filtered through a nylon mesh, obtaining a silicone oil compound (a-1).

At room temperature, 30 parts of silicone oil compound (a-1) was mixed with 70 parts of a polyoxyalkylene-modified organosiloxane (a-2) having the average compositional formula:

R¹₂R³SiO-(R¹₂SiO)ₓ-(R¹R₂SiO)_{y}-SiR¹₂R³

wherein R¹ and R³ denote -CH₃, R² denotes -C₃H₆O(C₂H₄O)₂₁(C₃H₆O)₂₁CH₃, x = 135, and y = 15, having a viscosity of 2,500 mm²/s. There was obtained an antifoam composition (A).

### Example 2

Using a gate mixer, 100 parts of a dimethylpolysiloxane capped with trimethylsilyl at an end of its branched molecular chain, containing CH₃SiO_{3/2} units in a molar fraction of 0.01 and having a viscosity of 8,000 mm²/s as the essentially hydrophobic organopolysiloxane, 12 parts of Nipsil HD-2 (Tosoh Silica Co., Ltd., specific surface area 300 m²/g) as the finely divided silica, and 2.4 parts of potassium siliconate containing 3% potassium hydroxide as the alkaline catalyst were kneaded in a nitrogen gas atmosphere at 150°C for 3 hours. The mixture was then cooled below 100°C, neutralized with 0.24 part of succinic acid, and filtered through a nylon mesh, obtaining a silicone oil compound (b-1).

At room temperature, 30 parts of silicone oil compound (b-1) was mixed with 50 parts of a polyoxyalkylene-modified organosiloxane (b-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O (C₂H₄O)_{25.5} (C₃H₆O)₈.5C₄H₉, x = 30, and y = 5, having a viscosity of 1,000 mm²/s and 20 parts of a polyoxyalkylene (b-3) having the average compositional formula: HO- (C₂H₄O)₂₅ - (C₃H₆O)₃₅ -H. There was obtained an antifoam composition (B).

### Example 3

Using a gate mixer, 100 parts of a both end trimethylsilyl-capped dimethylpolysiloxane having a viscosity of 5,000 mm²/s as the essentially hydrophobic organopolysiloxane, 8 parts of Aerosil R972 (Nippon Aerosil Co., Ltd., specific surface area 110 m²/g) as the finely divided silica, and 0.01 part of potassium hydroxide as the alkaline catalyst were kneaded in a nitrogen gas atmosphere at 150°C for 3 hours. The mixture was then cooled below 100°C, neutralized with 0.05 part of succinic acid, and filtered through a nylon mesh, obtaining a silicone oil compound (c-1).

At room temperature, 30 parts of silicone oil compound (c-1) was mixed with 50 parts of a polyoxyalkylene-modified organosiloxane (c-2) having the average compositional formula:

R¹₂R³SiO- (R¹₂SiO)ₓ-(R¹R²SiO)_{y}-SiR¹₂R³

wherein R¹ and R³ denote -CH₃, R² denotes -C₃H₆O(C₂H₄O)₂₃(C₃H₆O)₂₃C₄H₉, x = 27, and y = 3, having a viscosity of 1,700 mm²/s and 20 parts of a polyoxypropylene (c-3) having the average compositional formula: HO-(C₃H₆O)₃₀-H. There was obtained an antifoam composition (C).

### Example 4

An antifoam composition (D) was prepared by mixing 20 parts of silicone oil compound (a-1) prepared in Example 1 with 4 parts of sorbitol monostearate and 6 parts of polyoxyethylene (55) monostearate, heating the mixture for dissolution, adding 70 parts of water thereto, and agitating and emulsifying on a homomixer.

### Comparative Example 1

Using a gate mixer, 100 parts of the both end trimethylsilyl-capped dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, and 1 part of ammonium carbonate as an additive were kneaded in a nitrogen gas atmosphere at 150°C for 3 hours. The mixture was then cooled below 100°C and filtered through a nylon mesh, obtaining a silicone oil compound (e-1).

At room temperature, 30 parts of silicone oil compound (e-1) was mixed with 70 parts of a polyoxyalkylene-modified organosiloxane (e-2) having the average compositional formula:

R¹₂R³SiO-(R¹₂SiO)ₓ-(R¹R²SiO)_{y}-SiR¹₂R³

wherein R¹ and R³ denote -CH₃, R³ denotes -C₃H₆O(C₂H₄O)₂₁(C₃H₆O)₂₁CH₃, x = 135, and y = 15, having a viscosity of 2,500 mm²/s. There was obtained an antifoam composition (E).

### Comparative Example 2

Using a gate mixer, 100 parts of the both end trimethylsilyl-capped dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, and 1 part of potassium siliconate containing 3% potassium hydroxide as the alkaline catalyst were kneaded in a nitrogen gas atmosphere at 150°C for 3 hours. The mixture was then cooled below 100°C and neutralized with 1 part of 2-chloroethanol. This was followed by removal of 2-chloroethanol by vacuum distillation and filtration through a nylon mesh, obtaining a silicone oil compound (f-1).

At room temperature, 30 parts of silicone oil compound (f-1) was mixed with 70 parts of a polyoxyalkylene-modified organosiloxane (f-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O(C₂H₄O)₂₁(C₃H₆O)₂₁CH₃, x = 135, and y = 15, having a viscosity of 2,500 mm²/s. There was obtained an antifoam composition (F).

### Comparative Example 3

Using a gate mixer, 100 parts of the both end trimethylsilyl-capped dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, and 1 part of potassium siliconate containing 3% potassium hydroxide as the alkaline catalyst were kneaded in a nitrogen gas atmosphere at 150°C for 3 hours. The mixture was then cooled below 100°C, neutralized with 0.26 part of acetic acid, filtered through a nylon mesh, obtaining a silicone oil compound (g-1).

At room temperature, 30 parts of silicone oil compound (g-1) was mixed with 70 parts of a polyoxyalkylene-modified organosiloxane (g-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O(C₂H₄O)₂₁(C₃H₆O)₂₁CH₃, x = 135, and y = 15, having a viscosity of 2,500 mm²/s. There was obtained an antifoam composition (G).

### Comparative Example 4

Using a gate mixer, 100 parts of the both end trimethylsilyl-capped dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, and 1 part of potassium siliconate containing 3% potassium hydroxide as the alkaline catalyst were kneaded in a nitrogen gas atmosphere at 150°C for 3 hours. The mixture was then cooled below 100°C, neutralized with 0.91 part of isostearic acid, and filtered through a nylon mesh, obtaining a silicone oil compound (h-1).

At room temperature, 30 parts of silicone oil compound (h-1) was mixed with 70 parts of a polyoxyalkylene-modified organosiloxane (h-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O(C₂H₄O)₂₁(C₃H₆O)₂₁CH₃, x = 135, and y = 15, having a viscosity of 2,500 mm²/s. There was obtained an antifoam composition (H).

### Comparative Example 5

Using a gate mixer, 100 parts of the both end trimethylsilyl-capped dimethylpolysiloxane having a viscosity of 10,000 mm²/s as the essentially hydrophobic organopolysiloxane, 5 parts of Aerosil 300 (Nippon Aerosil Co., Ltd., specific surface area 300 m²/g) as the finely divided silica, and 1 part of potassium siliconate containing 3% potassium hydroxide as the alkaline catalyst were kneaded in a nitrogen gas atmosphere at 150°C for 3 hours. The mixture was filtered through a nylon mesh directly (i.e., without neutralization), obtaining a silicone oil compound (i-1).

At room temperature, 30 parts of silicone oil compound (i-1) was mixed with 70 parts of a polyoxyalkylene-modified organosiloxane (i-2) having the average compositional formula:

R¹₂R³SiO-(R¹₂SiO)ₓ-(R¹R²SiO)_{y}-SiR¹₂R³

wherein R¹ and R³ denote -CH₃, R² denotes -C₃H₆O(C₂H₄O)₂₁(C₃H₆O)₂₁CH₃, x = 135, and y = 15, having a viscosity of 2,500 mm²/s. There was obtained an antifoam composition (I).

### [Tests]

### Antifoaming ability (initial)

To an aqueous cutting fluid (Yushiroken FGE275 by Yushiro Chemical Industry Co., Ltd.), each sample of the antifoam compositions was added in an active component concentration of 0.5 wt%. The fluid was diluted to a 20-fold volume with water. In a 1-L beaker, the liquid was agitated at 10,000 rpm for 15 minutes by a homomixer. The total volume (mL) of the liquid and foam at the end of 15 minute agitation, and the time passed from the end of agitation until complete extinguishment of foam were measured.

### Antifoaming ability (aged 50°C x 7 days)

The aqueous cutting fluid having the antifoam composition added in an active component concentration of 0.5 wt% (as above) was aged at 50°C for 7 days. The fluid was then diluted to a 20-fold volume with water. In a 1-L beaker, the liquid was agitated at 10,000 rpm for 15 minutes by a homomixer. The total volume (mL) of the liquid and foam at the end of 15 minute agitation, and the time passed from the end of agitation until complete extinguishment of foam were measured.

### Internal addition stability

The aqueous cutting fluid having the antifoam composition added in an active component concentration of 0.5 wt% (as above) was aged at 50°C for 7 days, after which its appearance was visually observed and rated according to the following criterion.
○: no suspended or settled matter
Δ: some suspended and settled matter
X: much suspended and settled matter

### Viscosity stability of oil compound

The oil compound samples (a-1) to (i-1) were shelf stored at 25°C for 3 months. A percent change of viscosity before and after storage, i.e., aged viscosity/initial viscosity, was determined, and the sample was rated according to the following criterion.
○: aged viscosity/initial viscosity < 1.1
Δ: 1.1 ≤ aged viscosity/initial viscosity < 2.0
X: aged viscosity/initial viscosity ≥ 2.0 or gelled

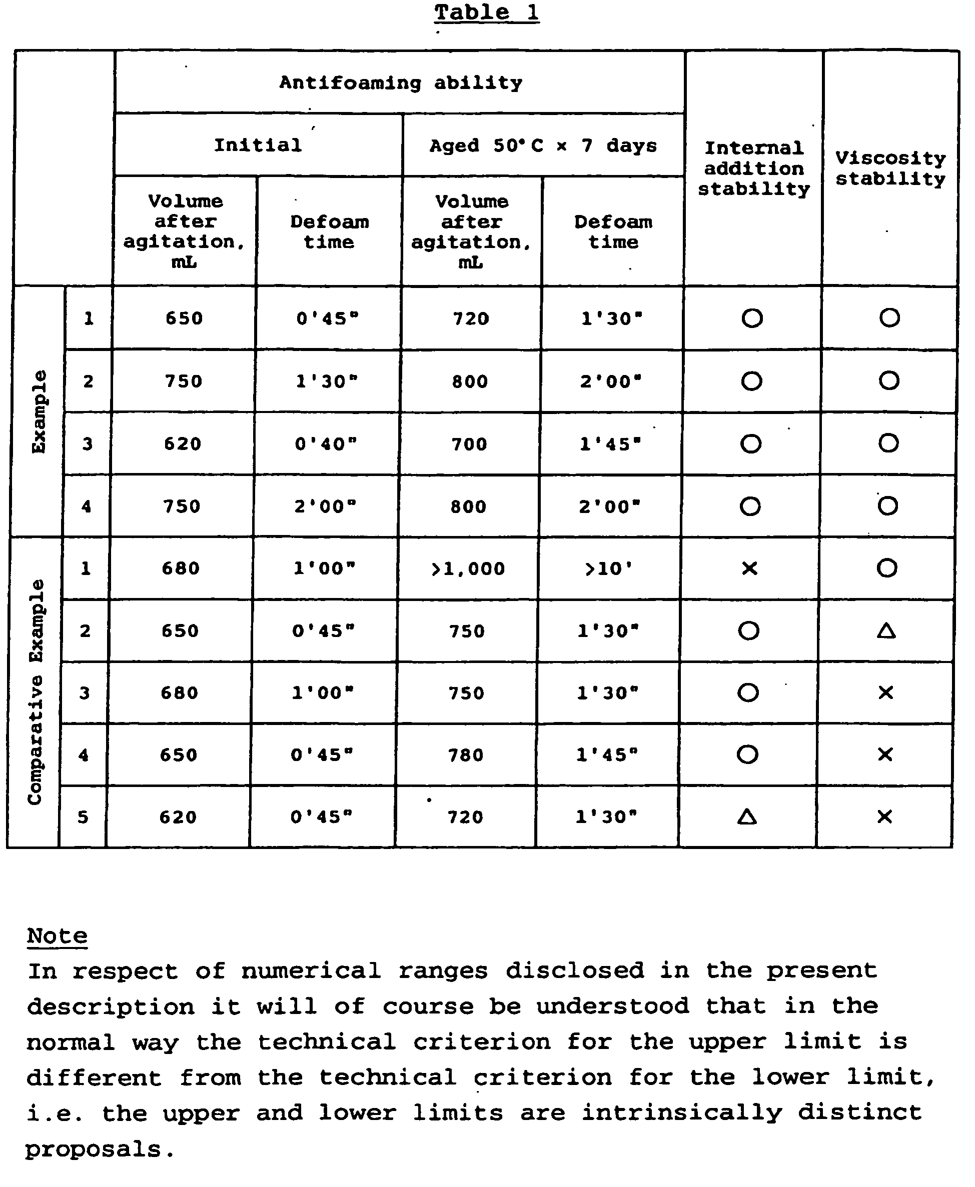

## Claims

1. A method for preparing an oil compound for use as an antifoam agent, comprising the steps of:
mixing and treating, at from room temperature to 200°C, (A) 100 parts by weight of essentially hydrophobic organopolysiloxane having a viscosity of 10 to 100,000 mm²/s at 25°C, (B) 1 to 20 parts by weight of finely divided silica and (C) 0.001 to 5 parts by weight of alkaline catalyst comprising an oxide, hydroxide, alkoxide or siliconate of an alkali metal or alkaline earth metal,
neutralising the treated mixture with a solid acid, and
removing the residual solid acid and neutralised salt by filtration.

2. A method of claim 1 in which the solid acid is a carboxylic acid, solid at room temperature.

3. A method of claim 2 wherein said solid acid is succinic acid.

4. A method of claim 1, 2 or 3 in which the molar ratio of the solid acid to alkali metal of the alkaline catalyst is from 0.6 to 1.2.

5. A method of any one of claims 1 to 4 wherein said alkaline catalyst is potassium siliconate or potassium hydroxide.

6. A method of any one of claims 1 to 5 in which the organopolysiloxane (A) has the average compositional formula (I) :
RₘSiO_{(4-m)/2}
in which R, which may be the same or different, denote monovalent hydrocarbon groups of 1 to 18 carbon atoms, unsubstituted or substituted by halogen atom, cyano, amino
or hydroxyl, at least 90 mol% of all R being methyl, 'm' is a positive number from 1.9 to 2.2, and the organopolysiloxane may be terminated with triorganosilyl group of the formula R₃Si- or with diorganohydroxysilyl group of the formula HOR₂Si-.

7. An antifoam composition comprising an oil compound prepared by a method of any one of claims 1 to 6, and which has a percent change of viscosity before and after storage at 25°C for 3 months which is less than 1.1, the viscosity being kinematic viscosity measured at 25°C by an Ostwald viscometer.

8. An antifoam composition of claim 7 which is of solution type, wherein the oil compound is dispersed in a solvent in which the organopolysiloxane (A) is soluble.

9. An antifoam composition of claim 7 which is of self-emulsification type, comprising a polyoxyalkylene-modified organopolysiloxane.

10. An antifoam composition of claim 7 which is of emulsion type, wherein the oil compound is emulsified.

11. Use, as antifoam, of a composition of any one of claims 7 to 10 or oil compound obtainable by a method of any one of claims 1 to 6.

## Patentansprüche

1. Verfahren zur Herstellung einer Ölverbindung zur Verwendung als Schaumverhütungsmittel, das folgende Schritte umfasst:
Mischen und Behandeln von (A) 100 Gewichtsteilen eines im Wesentlichen hydrophoben Organopolysiloxans mit einer Viskosität von 10 bis 100.000 mm²/s bei 25 °C, (B) 1 bis 20 Gewichtsteilen feinverteiltem Silica und (C) 0,001 bis 5 Gewichtsteilen alkalischem Katalysator, der ein Oxid, Hydroxid, Alkoxid oder Siliconat eines Alkalimetalls oder Erdalkalimetalls umfasst, bei Raumtemperatur bis 200 °C,
Neutralisieren des behandelten Gemischs mit einer festen Säure und
Entfernen der restlichen festen Säure und des neutralisierten Salzes mittels Filtration.

2. Verfahren nach Anspruch 1, wobei die feste Säure eine Carbonsäure ist, die bei Raumtemperatur fest ist.

3. Verfahren nach Anspruch 2, wobei die feste Säure Bernsteinsäure ist.

4. Verfahren nach Anspruch 1, 2 oder 3, wobei das Molverhältnis zwischen der festen Säure und dem Alkalimetall des alkalischen Katalysators 0,6 bis 1,2 beträgt.

5. Verfahren nach einem der Ansprüche 1 bis 4, wobei der alkalische Katalysator Kaliumsiliconat oder Kaliumhydroxid ist.

6. Verfahren nach einem der Ansprüche 1 bis 5, wobei das Organopolysiloxan (A) die mittlere Zusammensetzungsformel (I) aufweist:
RₘSiO_{(4-m)/2}
worin die R, die gleich oder unterschiedlich sein können, für einwertige Kohlenwasserstoffgruppen mit 1 bis 18 Kohlenstoffatomen, unsubstituiert oder substituiert mit Halogenatom, Cyano, Amino oder Hydroxyl, stehen, wobei zumindest 90 Mol-% aller R Methyl sind, ,m' eine positive Zahl von 1,9 bis 2,2 ist und das Organopolysiloxan mit einer Triorganosilylgruppe der Formel R₃Si- oder mit einer Diorganohydroxysilylgruppe der Formel HOR₂Si- enden kann.

7. Schaumverhütungsmittelzusammensetzung, die eine durch ein Verfahren nach einem der Ansprüche 1 bis 6 hergestellte Ölverbindung umfasst und eine prozentuelle Änderung der Viskosität vor und nach 3-monatiger Lagerung bei 25 °C von weniger als 1,1 aufweist, wobei die Viskosität die bei 25 °C mithilfe eines Ostwald-Viskosimeters gemessene kinematische Viskosität ist.

8. Schaumverhütungsmittelzusammensetzung nach Anspruch 7, die vom Lösungstyp ist, wobei die Ölverbindung in einem Lösungsmittel dispergiert ist, in dem das Organopolysiloxan (A) löslich ist.

9. Schaumverhütungsmittelzusammensetzung nach Anspruch 7, die vom Selbstemulgiertyp ist und ein Polyoxyalkylen-modifiziertes Organopolysiloxan ist.

10. Schaumverhütungsmittelzusammensetzung nach Anspruch 7, die vom Emulsionstyp ist, wobei die Ölverbindung emulgiert ist.

11. Verwendung einer Zusammensetzung nach einem der Ansprüche 7 bis 10 oder einer Ölverbindung, die durch ein Verfahren nach einem der Ansprüche 1 bis 6 erhältlich ist, als Schaumverhütungsmittel.

## Revendications

1. Procédé pour préparer un composé huileux à utiliser en tant qu'agent anti-mousse, comprenant les étapes consistant à :
mélanger et traiter, entre la température ambiante et 200°C, (A) 100 parties en poids d'un organopolysiloxane essentiellement hydrophobe ayant une viscosité de 10 à 100 000 mm²/s à 25°C, (B) 1 à 20 parties en poids de silice finement divisée et (C) 0,001 à 5 parties en poids d'un catalyseur alcalin comprenant un oxyde, hydroxyde, alkylate ou siliconate d'un métal alcalin ou d'un métal alcalino-terreux,
neutraliser avec un acide solide le mélange traité, et
retirer par filtration l'acide solide résiduel et le sel neutralisé.

2. Procédé selon la revendication 1, dans lequel l'acide solide est un acide carboxylique, solide à la température ambiante.

3. Procédé selon la revendication 2, dans lequel ledit acide solide est l'acide succinique.

4. Procédé selon la revendication 1, 2 ou 3, dans lequel le rapport molaire de l'acide solide au métal alcalin du catalyseur alcalin est de 0,6 à 1,2.

5. Procédé selon l'une quelconque des revendications 1 à 4, dans lequel ledit catalyseur alcalin est le siliconate de potassium ou l'hydroxyde de potassium.

6. Procédé selon l'une quelconque des revendications 1 à 5, dans lequel l'organopolysiloxane (A) a la formule de composition moyenne (I) :
RₘSiO_{(4-m)/2}
dans laquelle les R, qui peuvent être identiques ou différents, représentent des groupes hydrocarbonés monovalents ayant 1 à 18 atomes de carbone, non substitués ou substitués par un atome d'halogène, cyano, amino ou hydroxyle, au moins 90 % en moles de tous les R étant méthyle, "m" est un nombre positif de 1,9 à 2,2, et l'organopolysiloxane peut être terminé par un groupe triorganosilyle de formule R₃Si- ou par un groupe diorganohydroxysilyle de formule HOR₂Si-.

7. Composition anti-mousse comprenant un composé huileux préparé par un procédé selon l'une quelconque des revendications 1 à 6, et qui a un pourcentage de changement de viscosité avant et après 3 mois de stockage à 25°C qui est inférieur à 1,1, la viscosité étant la viscosité cinématique mesurée à 25°C par un viscosimètre Ostwald.

8. Composition anti-mousse selon la revendication 7 qui est du type en solution, dans laquelle le composé huileux est dispersé dans un solvant dans lequel l'organopolysiloxane (A) est soluble.

9. Composition anti-mousse selon la revendication 7 qui est du type à auto-émulsification, comprenant un organopolysiloxane à modification polyoxyalkylène.

10. Composition anti-mousse selon la revendication 7 qui est du type en émulsion, dans laquelle le composé huileux est émulsionné.

11. Utilisation, à titre d'anti-moussant, d'une composition de l'une quelconque des revendications 7 à 10 ou d'un composé huileux pouvant être obtenu par un procédé de l'une quelconque des revendications 1 à 6.
